# EUROPEAN PATENT APPLICATION

(11) **EP 1 994 817 A1**
(43) Date of publication of application: **26.11.2008**
(21) Application number: 08156355.3
(22) Date of filing: 16.05.2008
(51) Int. Cl.: A01F 25/18

(54) **Actuator**

(30) Priority: 22.05.2007 FI 20070212 U
(71) Applicant: Aimo Kortteen Konepaja Oy, 84100 Ylivieska (FI)
(72) Inventor: Rajaniemi, Mikko, 84100 Ylivieska (FI)
(74) Representative: Antila, Harri Jukka Tapani

(57) **Abstract**

The invention relates to an actuator for packing a solid material, the actuator being arranged to be used in connection with a movable vehicle-mounted carrier. The actuator comprises a feeding receptacle (124) for receiving the solid material and a screw conveyor (120) comprising at least two parallel conveyor screws (110A, 110B) for conveying the solid material from the feeding receptacle (124) into a package.

## Description

### FIELD

The invention relates to an actuator for packing a solid material. The invention further relates to a vehicle-mounted carrier comprising an actuator according to the invention.

### BACKGROUND

Actuators for packing a solid material that are provided with a movable carrier typically comprise a feeding receptacle to receive the solid material from a conveyor, for instance. Usually, such a feeding receptacle has a downwardly tapering structure whose narrow lower part is provided with a conveyor, such as a belt conveyor or a screw conveyor, for conveying the solid material for packing. In some packing applications, the solid material, in order to be conveyed into a package, needs to be compressed, so the most appropriate conveyor mechanism is provided by a screw conveyor.

Prior art solutions suffer from drawbacks, including the narrowness of a screw conveyor and subsequent narrowness of an outlet aperture of the feeding receptacle. Narrow channels for solid material hinder the through-flow of the solid material and may cause blockage and impairment of performance of a packing machine. It is thus necessary to consider alternative actuator solutions.

### BRIEF DESCRIPTION

An object of the invention is to implement an actuator so as to provide a packing mechanism for a large-grain solid material. This is achieved by an actuator for packing a solid material, the actuator being arranged to be used in connection with a movable vehicle-mounted carrier, the actuator comprising: a feeding receptacle for receiving the solid material; and a screw conveyor comprising at least two parallel conveyor screws for conveying the solid material from the feeding receptacle into a package.

Preferred embodiments of the invention are disclosed in the dependent claims.

The invention is based on the idea that in connection with the feeding receptacle, two conveyor screws are positioned adjacently such that their material convey direction is the same.

The actuator according to the invention provides several advantages. An advantage is that the actuator is capable of packing a large-grain solid material.

### LIST OF FIGURES

The invention is now described in closer detail in connection with preferred embodiments and with reference to the accompanying drawings, in which

Figure 1 shows an embodiment of an actuator, as seen from above;

Figure 2 shows an embodiment of the actuator, as seen from behind;

Figure 3 shows a perspective view of an embodiment of the actuator; and

Figure 4 shows a perspective view of an embodiment of the actuator.

### DESCRIPTION OF EMBODIMENTS

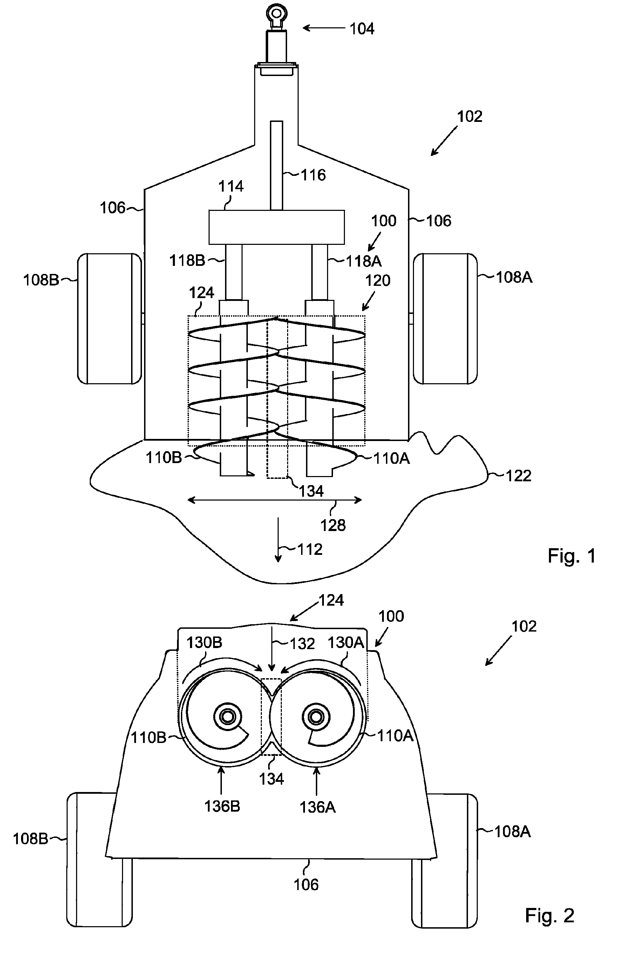

Referring to Figure 1, let us view an actuator 100 and a movable vehicle-mounted carrier 102, as seen from above.

The movable vehicle-mounted carrier 102 comprises a chassis 106 and wheels 108A, 108B. In an embodiment, the movable vehicle-mounted carrier 102 is a trailer carrier with wheels, in which case the movable vehicle-mounted carrier 102 comprises a traction device 104 via which the movable vehicle-mounted carrier 102 may be connected to a tractor vehicle, such as a tractor. Further, the movable vehicle-mounted carrier 102 may be provided with a power transmission mechanism 116 for transmitting mechanical or hydraulic power from the tractor vehicle to the actuator 100.

In an embodiment, the movable vehicle-mounted carrier 102 comprises a power source of its own, enabling the movable vehicle-mounted carrier 102 to be moved without an external tractor vehicle. The movable vehicle-mounted carrier 102 may be based e.g. on the chassis of a truck, lorry or a cross-country vehicle.

The actuator 100 may be temporarily or fixedly mountable to the movable vehicle-mounted carrier 102. In an embodiment, the actuator 100 is integrated in the movable vehicle-mounted carrier 102 during manufacture. The actuator 100 receives a solid material into a feeding receptacle 124 and conveys the solid material into a package 122.

The actuator comprises a screw conveyor 120 comprising at least two parallel conveyor screws 110A, 110B for conveying the solid material from the feeding receptacle 124 into the package 122 in a solid material convey direction 112. The conveyor screw 110A, 110B is a spiral structure with some rotational freedom around its longitudinal axis.

In an embodiment, the actuator 100 comprises a tunnel package feeding mechanism, the actuator thus being a tunnel packer. Typically, a tunnel package 122 is an elongated package having a length ranging between a few to tens of metres and formed by means of a tunnel packer. In such a case, a solid material is fed as a continuous flow into the feeding receptacle 124, and the screw conveyor 120 conveys the solid material into the tunnel package 122. In connection with the conveyance, the solid material is compressed between the package and the actuator 100, the actuator 100 thus being subjected to a force. Usually this force is large enough to push the movable vehicle-mounted carrier 102 and a possible tractor vehicle forward such that the tunnel package formation takes place as a continuous process. In such a case, the parallel conveyor screws 110A, 110B according to the disclosed solution allow for a continuous process since the actuator 100 according to the disclosed solution is insusceptible to blockage.

The solid material is e.g. some organic material, such as compost waste, manure, wood chips or animal feed. The solid material may contain non-homogenous components, such as branches or roots, which require quite large solid material conveyance channels. Thus, the disclosed solution is particularly suitable for packing a large-grain, in the order of tens of centimetres, solid material.

The fact that the conveyor screws 110A, 110B are parallel has several technical effects. One such technical effect is the width of an effective conveyance area, which enables such a large-grain solid material to be packed by the actuator 100. In an embodiment, the width of an outlet aperture 128 of the feeding receptacle 124 is in the order of the width of the screw conveyor 120.

In an embodiment, the distance between the conveyor screws 110A, 110B is at most the grain size of the solid material. The grain size may be determined by the average grain size or the maximum grain size, taking into account e.g. non-homogenous components in a compost, such as branches and tree roots.

The conveyor screws 110A, 110B may be connected via axes 118A, 118B to a power distribution mechanism 114 which receives power from the power transmission mechanism 116 and distributes the power to the conveyor screws 110A, 110B. This makes it possible for the conveyor screws 110A, 110B to have the same rotation speed, if desired. In an embodiment, the power distribution mechanism 114 is configured e.g. by gear solutions such that the conveyor screws 110A, 110B have opposite rotation directions 130A, 130B, shown in Figure 2.

Referring to Figure 2, in one embodiment the feeding receptacle 124 comprises circularly profiled screw casings 136A, 136B which are open at a packing direction end. Each screw casing 136A, 136B constitutes a tubular structure which is open both in the longitudinal direction and at a solid material outlet end and which is dimensioned according to a conveyor screw 110A, 110B placed in the screw casing 136A, 136B. The screw casing 136A, 136B opens in a solid material inlet direction 132.

In an embodiment, the rotation directions 130A, 130B are chosen such that within the region of a contact point of the conveyor screws 110A, 110B, the direction of movement of the circumference of the conveyor screws 110A, 110B is parallel with the solid matter convey direction 132, whereby the conveyor screws 110A, 110B apply a tractive effect to the solid matter. In addition, a conveyor channel 134 is formed between the conveyor screws 110A, 110B, along which the solid matter is mainly conveyed into the package 122.

Still referring to Figure 2, in one embodiment the conveyor screws 110A, 110B at least partly overlap. In such a case, the combined effect of the conveyor screws 110A, 110B increases and the role of the conveyor channel 134 becomes more important. The combined effect is based on the fact that within the overlap region, the conveyance capacity of the conveyor screws 110A, 110B is summed up, so that the conveyance capacity of the overlap region is substantially double per a conveyance blade unit area in comparison with the other regions of a conveyance screw.

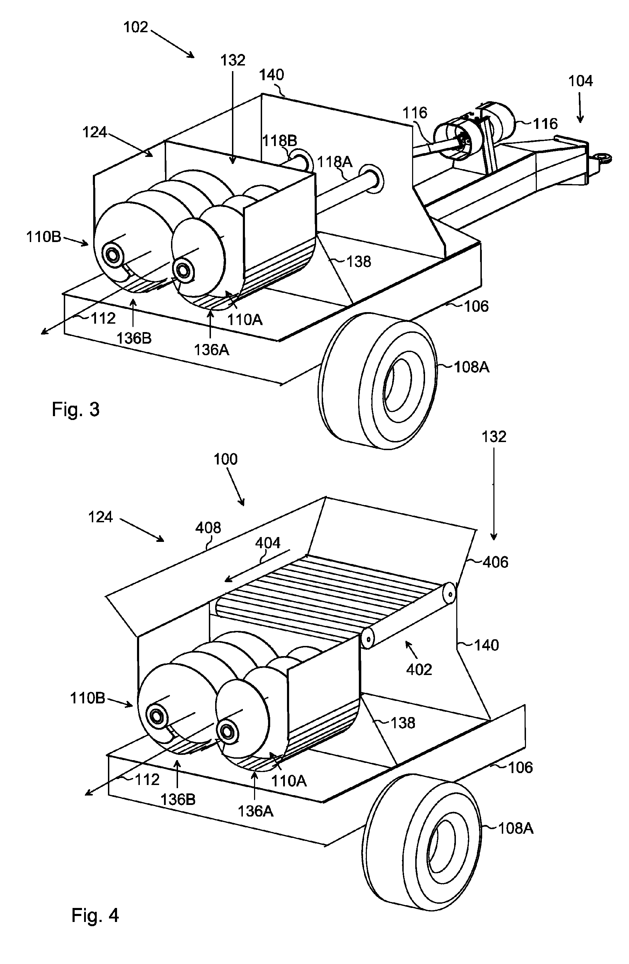

Referring further to the perspective view of Figure 3, the feeding receptacle 124 is shown as a structure with an open rear end. In the disclosed embodiment, the power transmission mechanism 116 comprises an axis-joint structure enabling a mechanical force to be transmitted e.g. from the power outlet of a tractor to the conveyor screws 110A, 110B. Figure 3 further shows a support structure 138 enabling the feeding receptacle 124 to be supported against the vehicle-mounted carrier 102. A support structure 140 is also shown to which a power distribution mechanism 114 (not shown in Figure 3) may be attached.

Referring to Figure 4, the feeding receptacle 124 may be a funnel-shaped structure with edges 406, 408. The actuator 100 may also comprise a belt conveyor or a flat top conveyor 402 at the bottom part of the feeding receptacle 124. The belt or flat top conveyor 402 enables use of a large feeding receptacle and conveyance of a solid material to the conveyor screws 110A, 110B as a continuous flow.

Although the invention has been described above with reference to the example according to the accompanying drawings, it is apparent that the invention is not restricted thereto but may be modified in many ways within the scope of the attached claims.

## Claims

1. An actuator for packing a solid material, the actuator being arranged to be used in connection with a movable vehicle-mounted carrier, **characterized in that** the actuator comprises:
a feeding receptacle (124) for receiving the solid material; and
a screw conveyor (120) comprising at least two parallel conveyor screws (110A, 110B) for conveying the solid material from the feeding receptacle (124) into a package.

2. An actuator as claimed in claim 1, **characterized in that** the distance between the at least two parallel conveyor screws (110A, 110B) is at most the grain size of the solid material.

3. An actuator as claimed in claim 1, **characterized in that** the rotation directions of the at least two parallel conveyor screws (110A, 110B) are mutually opposite.

4. An actuator as claimed in claim 1, **characterized in that** the at least two parallel conveyor screws (110A, 110B) are at least partly mutually overlapping.

5. An actuator as claimed in claim 1, **characterized in that** the feeding receptacle (124) comprises circularly profiled screw casings (136A, 136B) which are open at a packing direction end, each screw casing (136A, 136B) being dimensioned according to a conveyor screw (110A, 110B) placed therein and the screw casings (136A, 136B) opening in a solid material inlet direction.

6. An actuator as claimed in claim 1, **characterized in that** the width of an outlet aperture of the feeding receptacle (124) in a direction opposite to a solid material convey direction (112) is in the order of the width of the screw conveyor (120).

7. An actuator as claimed in claim 1, **characterized in that** it further comprises a tunnel package feeding mechanism, the actuator thus being a tunnel packer.

8. An actuator as claimed in claim 1, **characterized in that** it further comprises a belt conveyor or a flat top conveyor (402) at a bottom part of the feeding receptacle (124) for conveying the solid material to the screw conveyor (120).

9. A vehicle-mounted carrier, **characterized in that** it comprises an actuator according to claim 1.
